Europäisches Patentamt

European Patent Office

Office européen des brevets

(19)

(11) Veröffentlichungsnummer : **0 183 972**
**B1**

(12)  # EUROPÄISCHE PATENTSCHRIFT

(45) Veröffentlichungstag der Patentschrift :
**11.01.89**

(51) Int. Cl.⁴ : **A 61 C 1/06**

(21) Anmeldenummer : **85113623.4**

(22) Anmeldetag : **25.10.85**

(54) **Zahnärztliche Handstückanordnung.**

(30) Priorität : **09.11.84 DE 3441024**

(43) Veröffentlichungstag der Anmeldung :
**11.06.86 Patentblatt 86/24**

(45) Bekanntmachung des Hinweises auf die Patenterteilung : **11.01.89 Patentblatt 89/02**

(84) Benannte Vertragsstaaten :
**AT CH DE FR GB IT LI SE**

(56) Entgegenhaltungen :
**DE--B-- 1 250 053**
**DE--B-- 2 659 060**
**FR--A-- 2 280 355**
**FR--A-- 2 345 135**

(73) Patentinhaber : **Siemens Aktiengesellschaft Berlin und München**
**Wittelsbacherplatz 2**
**D-8000 München 2 (DE)**

(72) Erfinder : **Landgraf, Hermann**
**Donaustrasse 1**
**D-6148 Heppenheim (DE)**
Erfinder : **Schuss, Werner**
**In der Lahrbach 18**
**D-6148 Heppenheim (DE)**
Erfinder : **Worschischek, Rainer-Karl**
**Magnolienstrasse 57**
**D-6143 Lorsch (DE)**

Jouve, 18, rue St-Denis, 75001 Paris, France

EP 0 183 972 B1

## Beschreibung

Die Erfindung bezieht sich auf eine zahnärztliche Handstückanordnung mit einem Antriebsmotor, an dessen Welle der Triebwellenabschnitt eines eine Griffhülse mit Kopfgehäuse enthaltenden Handstückteils ankuppelbar ist.

In der Dentaltechnik ist es seit langem bekannt und üblich, die im wesentlichen das Kopfgehäuse mit sich daran anschließender Griffhülse enthaltenden Handstückteile, in der Fachwelle mit « Hand- und Winkelstücke » bezeichnet, leicht abnehmbar an einem den Antriebsmotor enthaltenden Antriebsteil zu haltern. Die Verbindung ist dabei so gestaltet, daß das Hand- und Winkelstück im aufgesetzten Zustand unter Beibehaltung der Triebwellenverbindung gegenüber dem Antriebsteil gedreht werden kann. Das An- und Abkuppeln erfolgt mittels einer Schnellkupplung über einen die Antriebswelle des Antriebsteils umgebenden Führungszapfen (US-A-36 04 960).

Solche Handstückanordnungen hat man auch mit der Einführung der sogenannten inkorporierten Sprayführung, also der Kühlmedien- (Luft und Wasser) führung innerhalb des Antriebsteile und innerhalb der Hand- und Winkelstücke beibehalten, wobei die Führung der Medien innerhalb des Antriebsteils zwischen Stator und Motorgehäuse und die Medienübergabe am Führungszapfen in Form von durch O-Ringe gegeneinander abgedichteten, radial am Zapfen mündenden Öffnungen und diesen zugeordneten Ringkanälen im Hand- und Winkelstück realisiert wurde (US-A-40 07 529 und DE-A-2 659 060).

Neben diesen konventionellen Handstückanordnungen hat sich seit einigen Jahren auch eine Handstückanordnung durchgesetzt, bei der die Griffhülse normalerweise am Antriebsteil verbleibt und lediglich relativ kurze, das Kopfgehäuse enthaltende Behandlungsköpfe leicht lösbar an das Antriebsteil angekuppelt werden. Die Griffhülse selbst wird lediglich zu Sterilisationszwecken zusammen mit einer den Antriebsteil, welcher die Medienführung beinhaltet, übergreifenden Hülse vom Antrieb abgenommen. Griffhülse und Behandlungskopf sind gegenüber dem Antriebsteil frei drehbar, nicht jedoch die den Motor übergreifende Hülse, welche zusammen mit der Griffhülse vom Antriebsteil abgezogen werden kann (US-A-42 51 212).

Die Medienführung erfolgt auch bei diesem Handstücksystem innerhalb des Antriebsteils, die Medienübergabe über einen entsprechend ausgebildeten Führungszapfen.

Der immer stärker werdende Wunsch, solche motorbetriebenen Handstückanordnungen auch mit einer inkorporierten Lichtführung anzubieten, würde zunächst bedeuten, weitere zusätzliche Varianten mit Lichtführung vorzusehen, die mit den bisher auf dem Markt befindlichen Handstückanordnungen dann nicht mehr kompatibel wären. Dies würde insbesondere die Motorseite betreffen, wo Antriebe mit und ohne Licht zum Ankuppeln des einen oder anderen, oben erläuterten Handstücksystems anzubieten wären.

Der im Anspruch 1 angegebenen Erfindung liegt daher die Aufgabe zugrunde, eine Handstückanordnung zu schaffen, mit der die Voraussetzung dafür geschaffen wird, daß ein und derselbe Antriebsmotor sowohl für den Einsatz konventioneller Hand- und Winkelstücke als auch für den Einsatz bereits bekannter und gegebenenfalls noch anderer, motorübergreifender Handstückteile vorgesehen werden kann, wobei an den Antriebsmotor sowohl lichtführende Handstücke als auch solche ohne Licht ankuppelbar sein sollen.

Dadurch, daß in der Motorpatrone selbst keine Medien, also weder Lichtleiter noch Kühlmittelleitungen, geführt sind, letztere vielmehr, zusammen mit einem Anschluß für elektrische Energie, am rückwärtigen Ende an einem Ansatzteil der Motorpatrone in einem drehbar dort gehaltenen Kupplungskörper angeboten werden, kann durch geeignete Adaptoren sehr leicht eine Anpassung an alle auf dem Markt befindlichen konventionellen Hand- und Winkelstücke und auch an weitere, anders gestaltete Handstückteile mit und ohne Lichtführung erfolgen. Der im Außendurchmesser gegenüber den übrigen Teilen der Motorpatrone abgesetzte Ansatz erlaubt es, die Anschluß- bzw. Kupplungsglieder für die Medien, insbesondere auch eine Glühlampe als Lichtquelle, zur Einspeisung von lichtführenden Elementen platzsparend unterzubringen.

Weitere vorteilhafte Ausgestaltungen und Weiterbildungen der Erfindung sind in den Unteransprüchen enthalten und aus der nachfolgenden Beschreibung eines Ausführungsbeispiels der Erfindung zu entnehmen.

Es zeigen :

Figur 1   die erfindungsgemäße Motorpatrone I,

Figur 2   ein Anschlußteil II,

Figur 3   einen Kupplungskörper III,

Figur 4   ein Handstück IV mit motorübergreifender Griffhülse,

Figur 5   einen Adapter V,

Figur 6   ein Hand- und Winkelstück VI,

Figur 7   einen Schnitt durch Motorpatrone I mit aufgesetztem Kupplungskörper III,

Figur 8   eine Frontansicht auf die Motorpatrone I mit aufgesetztem Kupplungskörper III,

Figur 9   einen Schnitt entlang der Linie IX/IX in Figur 7,

Figur 10   einen Schnitt entlang der Linie X/X in Figur 7,

Figur 11   einen Schnitt entlang der Linie XI/XI in Figur 12,

Figur 12   eine motorseitige Ansicht des Adapters V,

Figur 13   einen Schnitt entlang der Linie XII/XII in Figur 12,

Figur 14   eine Frontansicht (handstückseitig) des Adapters V.

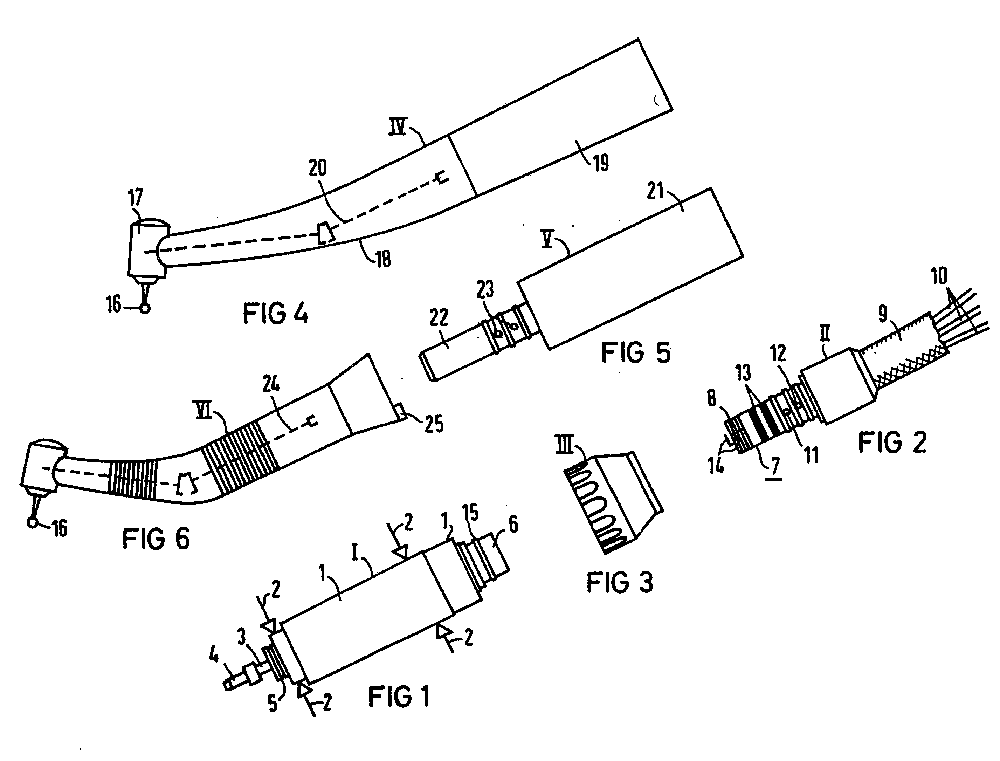

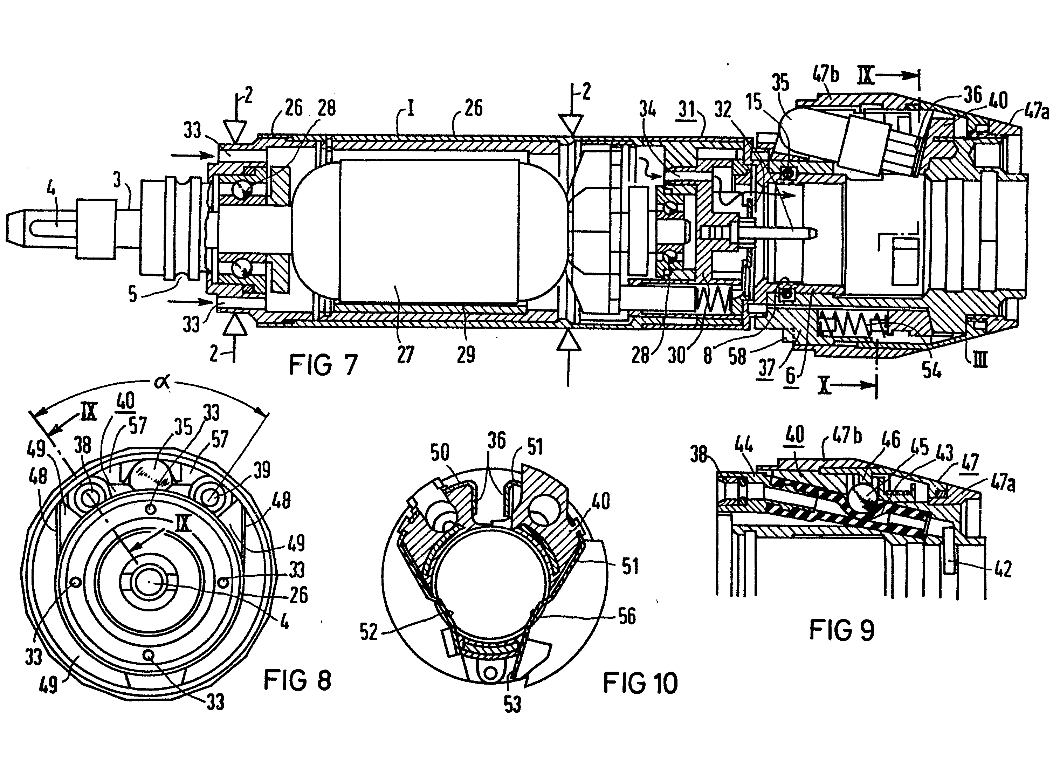

Die Figur 1 zeigt das Grundelement der erfindungsgemäßen Handstückanordnung, die Motorpatrone. Die Motorpatrone, in der Darstellung mit I bezeichnet, weist im wesentlichen zylindrische Mantelflächen 1 auf, welche an den mit den Pfeilen 2 versehenen Stellen zwei zueinander beabstandete Gleitlagerflächen für die auf die Motorpatrone aufsetzbaren Handstückteile bilden. Die Motorpatrone nimmt, wie aus Figur 7 ersichtlich, im wesentlichen nur die motorspezifischen Teile, also Rotor, Stator, Lager, Bürsten und Bürstenhalter, auf. Das an der einen Stirnseite der Patrone vorstehende Ende der Motorwelle 3 enthält einen Mitnehmer 4, mit dem in bekannter Weise mit dem Aufstecken der später noch näher erläuterten Handstückteile die Motorwelle an den korrespondierenden Triebwellenabschnitt des Handstückteils angekuppelt wird. Mit 5 ist eine an einem weiteren Absatz der Motorpatrone angeordnete Ringnut bezeichnet, die Teil einer Rasteinrichtung ist, mittels der die aufzusetzenden Handstückteile unter Beibehaltung ihrer Drehbarkeit gegenüber der Antriebspatrone axial gerastet werden können.

Die andere Stirnseite der Antriebspatrone bildet einen Ansatz 6, dessen Außendurchmesser im Vergleich zu dem der zylindrischen Mantelflächen 1, welche die beiden Gleitlagerungen bilden, wesentlich kleiner ist.

Der Ansatz 6 ist, wie aus der Schnittdarstellung gemäß Figur 7 ersichtlich, Teil einer auf der Motorpatrone aufgeschraubten Hülse. In die Öffnung des hülsenförmigen Ansatzes 6 ist der Zapfen 7 eines in Figur 2 gezeigten, mit II bezeichneten Anschlußteiles teilweise einführbar und mittels Schraubverbindung 8 fest (unverdrehbar) mit der Motorpatrone verbindbar. Am Zapfen 7 des Anschlußteils II enden die in einem Versorgungsschlauch 9 herangeführten, mit 10 bezeichneten Zuleitungen für einerseits elektrische Energie und andererseits Luft und Wasser. Luft und Wasser münden in bekannter Weise an radialen, am Zapfenumfang angeordneten, durch nicht näher bezeichnete O-Ringe gegeneinander abgedichteten Öffnungen 11, 12. Die elektrischen Leitungen enden am Zapfen einerseits an einem Schleifringpaar 13 und andererseits an einem stirnseitig des Zapfens angeordneten Kontaktpaar 14. Letzteres besteht aus einer zentrisch im Zapfen 7 angeordneten Kontaktbuchse und einer konzentrisch dazu angeordneten Kontaktfeder. Das Schleifringpaar 13 dient zur Zufuhr elektrischer Energie an eine später noch näher erläuterte Beleuchtungseinrichtung, das Kontaktpaar 14 zur Zufuhr der notwendigen Spannung an den Motor.

Die Figur 3 zeigt einen mit III bezeichneten Kupplungskörper, der, bevor die in Figur 2 gezeigte Anschlußarmatur II mit der Motorpatrone verschraubt wird, auf den Ansatz 6 axial aufgesteckt und mittels eines O-Ringes 15 (Figur 1) axial fixiert wird. Einzelheiten vom Kupplungskörper sind aus der Schnittdarstellung in Figur 7 ersichtlich.

Im montierten Zustand, also nach Aufsetzen des Kupplungskörpers III auf die Motorpatrone I und anschließendem Verschrauben der Anschlußarmatur II mit der Motorpatrone I, kann alternativ entweder das in Figur 4 gezeigte Handstück IV oder ein in Figur 5 gezeigter Adapter V axial aufgesetzt und mittels der bereits erwähnten Schnellrasteinrichtung gegen axiales Abgleiten gesichert, gerastet werden. Wie später noch näher erläutert, sind diese Teile (IV oder V) im aufgesetzten Zustand drehfest mit dem Kupplungskörper III verbunden, können also gemeinsam mit diesem gegen die Motorpatrone verdreht werden.

Bei dem Handstück nach Figur 4 handelt es sich um ein Handstückteil, bei dem ein das anzutreibende Werkzeug 16 aufnehmendes Kopfgehäuse 17 zusammen mit einer sich zum motorseitigen Ende erstreckenden Griffhülse 18 und eine die Motorpatrone übergreifende, die Gegenlagerflächen zu 2 aufnehmende weitere Hülse 19 eine Einheit bilden. Im aufgesteckten Zustand befindet sich das motorseitige Ende der allgemein mit 20 bezeichneten Triebwellenabschnitte des Handstückteils IV in Eingriff mit der Motorwelle 3.

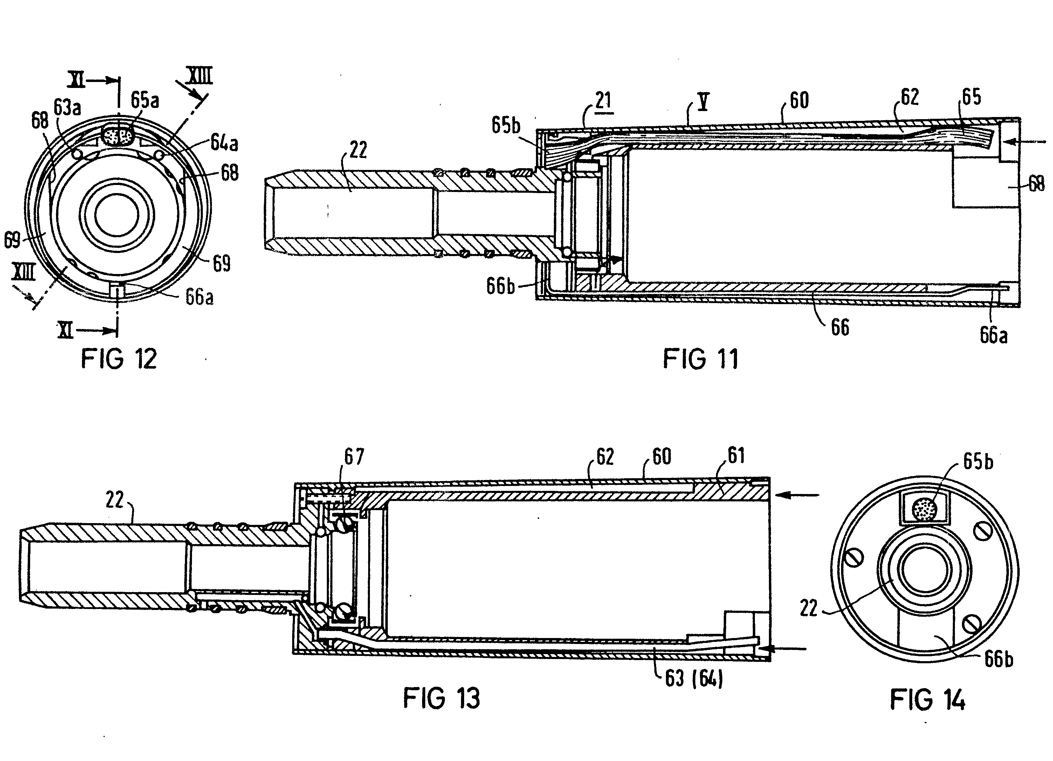

Der Adapter V gemäß Figur 5 enthält einen hülsenförmigen Abschnitt 21 und einen Führungszapfen 22, an dem in bekannter Weise an radial mündenden Öffnungen 23 die Medien Luft und Wasser, durch nicht näher bezeichnete O-Ringe 24 gegeneinander abgedichtet, zur weiteren Übernahme in einem auf den Zapfen 22 aufsteckbaren Hand- und Winkelstück, wie in Figur 6 gezeigt, angeboten werden. Der Zapfen 22 ist so bemessen, daß auf ihm handelsübliche, nach ISO genormte Hand- und Winkelstücke, wie in Figur 6 vereinfacht dargestellt, aufgesteckt werden können. Im komplett montierten Zustand, wenn also die Teile VI, V und I miteinander verbunden sind, sind auch die Triebwellenabschnitte 24 mit der Motorwelle 3 verbunden. Mit 25 ist noch eine stirnseitig des Handstückes VI vorstehende Nase bezeichnet, mit der, wie später noch näher erläutert, ein Schaltvorgang ausgelöst werden soll. Weitere Einzelheiten des Adapters V sind aus den Figuren 11 bis 14 ersichtlich.

Die Figur 7 zeigt die Motorpatrone I mit aufgesetztem Kupplungskörper III im Längsschnitt. Aus der Darstellung ist ersichtlich, daß das Motorgehäuse 26 im wesentlichen nur die motorspezifischen Teile, also Rotor 27, Lager 28, Stator 29, Bürsten und -halterung 30 etc., dagegen keine Kühlmittelleitungen und Lichtleiter, enthält.

Der den Kupplungskörper III tragende Ansatz 6 ist der eine Abschnitt einer im Außendurchmesser abgestuften Hülse, deren anderer Abschnitt mit dem Motorgehäuse 26 verschraubt ist. Der Innendurchmesser des abgestuften Teils der Hülse ist so bemessen, daß der Führungszapfen 7 des Anschlußteils II eingeführt und dort über die Schraubverbindung 8 mit der Motorpatrone I verbunden werden kann. Wird die Schraubhülse 31 vom Motorgehäuse 26 abgeschraubt, ist die Bürstenhalterung 30 z. B. für den Austausch der Kohlebürsten zugänglich. Zur elektrischen Kontaktierung ist ein zum Kontaktpaar 14 am Zapfen 7 (Figur 2) passendes Gegenkontaktpaar 32, bestehend aus einem zentrisch angeordneten Stift und einem konzentrisch dazu isoliert angeordneten Kontaktring vorgesehen. Mit 33 und 34 sind an beiden Stirnseiten des Motors angeordnete, achsparallel verlaufende Kanäle bezeichnet, über die Kühlluft zur Kühlung des Motors - wie durch Pfeile angedeutet - von der kupplungsseitigen Stirnseite aus eingeleitet zwischen Stator und Rotor hindurchgeleitet und anschließend über die Bürstenhalterung 30 wieder zurück in den Versorgungsschlauch 9 geführt werden kann. Die Zuführung der Kühlluft zur kupplungsseitigen Stirnseite ist aus den nachfolgenden Figuren, die das Teil V zeigen, ersichtlich.

Der auf dem Ansatz 6 drehbar aufgesetzte Kupplungskörper III ist Träger einer elektrischen Glühlampe 35 mit zugehöriger Lampenfassung 36 und einer mit 37 bezeichneten Schalteinrichtung zum Ein- und Ausschalten der Lampe, wenn das eine oder andere Handstückteil IV oder V auf die Motorpatrone I aufgesteckt wird. Der Kupplungskörper III enthält ferner die für Luft und Wasser notwendigen Leitungskanäle sowie eine Durchflußregeleinrichtung zur Steuerung des Durchflusses des einen oder anderen Mediums. Lampe bzw. Lampenfassung und die mit 38 und 39 (Fig. 8) bezeichneten Anschlußbuchsen für Wasser und Luft sind in einem Halterungsteil 40 auf einen relativ eng begrenzten Winkelbereich ($\alpha$) von ca. 60° bis 70° des Umfanges zusammengefaßt und enden stirnseitig so (Figur 8), daß an sie entsprechend ausgebildete Gegenglieder der auf die Motorpatrone aufsteckbaren Handstückteile angekuppelt werden können. Aus der Schnittdarstellung in Figur 7 ist ersichtlich, daß die Glühlampe 35 schräg zur Motorachse verlaufend angeordnet ist. Aus Platzgründen kann dies zwar vorteilhaft sein ; diese Anordnung ist jedoch nicht zwingend notwendig, die Lampe kann vielmehr auch waagerecht, also mit parallel zur Motorachse verlaufender Längsachse, im Halterungsteil 40 angeordnet sein.

Aus Figur 8 geht hervor, daß die beiden Anschlußbuchsen 38, 39 für Wasser und Luft symmetrisch zu der mittig liegenden Lampe 35 angeordnet sind. Anhand der Figur 9, die einen Schnitt entlang der Linie IX/IX in Figur 8 zeigt, wird die Medienführung innerhalb des Kupplungskörpers III, und zwar am Beispiel der Wasserführung aufgezeigt. Das Wasser wird über einen Kanal 42 aus der Öffnung 12 im Zapfen 7 (Figur 2) übernommen und mittels eines im Halterungsteil 40 angeordneten flexiblen Schlauchabschnittes 43 an ein die Buchse 38 enthaltendes Endteil 44 geleitet. Buchse bzw. Buchse und Endteil 44 sind vorteilhafterweise auswechselbar im Teil 40 angeordnet. Analog ist die Luftführung gestaltet. Bei der Wasserführung ist ergänzend noch eine Regeleinrichtung zur Bestimmung der Durchflußmenge vorgesehen. Diese Regeleinrichtung enthält eine Kugel 45, die mit Hilfe eines eine exzentrisch angeordnete Stellfläche 46 aufweisenden Stellringes 47 bei dessen Drehung im Sinne einer Quetschung des Schlauchabschnittes 43 verstellt wird. Der Stellring 47 ist zweiteilig ausgebildet und besteht aus einem die Stellfläche 46 enthaltenden ersten Ring 47a und einem die Glühlampe 35 überdeckenden zweiten Ring 47b. Das Teil 40 enthält axial vorstehende Positionierungs- und Mitnahmeteile 49 mit zueinander parallelen Flächen 48 (Figur 8), die mit entsprechend an den anzukuppelnden Handstückteilen (IV/V) angeordneten Gegenflächen 68 von Gegengliedern 69 beim Aufsetzen dieser Handstückteile auf die Motorpatrone in Eingriff kommen und Handstückteil und Kupplungskörper für eine gemeinsame Drehung miteinander verbinden.

Anhand der Figur 10, die einen Querschnitt entlang der Linie X/X in Figur 7 zeigt, wird die elektrische Kontaktierung zum Ein- und Ausschalten der Glühlampe 35 näher erläutert. Im Halterungsteil 40 sind beidseitig federnde Kontaktfahnen 50, 51 angeordnet, deren eine Enden die Lampenfassung 36 bilden und von deren anderen Enden das eine, mit 52 bezeichnete Ende eine auf dem einen Schleifring des Kontaktpaares 13 (Figur 2) des Zapfens 7 anliegende Kontaktfläche bildet und das andere, mit 53 bezeichnete Ende mit einer federbelasteten (Feder 54 in Figur 7) Schaltnocke (Pos. 37 in Fig. 7) zusammenwirkt. Bei axialer Betätigung der Schaltnocke 27 wird der mit 56 bezeichnete Kontaktabschnitt freigegeben, wodurch der Kontakt mit dem zweiten Schleifring des Schleifringpaares 13 hergestellt und die Lampe 35 eingeschaltet wird.

Anhand der Figuren 11 bis 14 wird am Beispiel des Adapters V der Aufbau des auf die Motorpatrone aufsetzbaren Handstückteils erläutert. Die für dieses spezielle Handstückteil in bezug auf die Führung der Medien Luft, Wasser und Licht sowie für das Einschalten der Lampe vorgesehenen Maßnahmen gelten entsprechend auch für ein Handstückteil, das, wie in Figur 4 dargestellt, ausgebildet ist.

Der die Motorpatrone I übergreifende hülsenförmige Abschnitt 21 besteht aus einer die äußere Umhüllung bildenden dünnen Außenhülse 60 und einem Einsatzteil 61, dessen Innenkontur der Motorpatrone I entspricht und insbesondere die zur Verdrehung notwendigen, den Lagerstellen 2 entsprechende Gegenflächen aufweist. Das Einsatzteil 61 enthält an seiner Peripherie Ausnehmungen 62, die mit der Außenhülse 60 einen ringförmigen Raum bilden, in dem einerseits Rohrleitungen 63 und 64 zur Durchführung von Luft und Wasser und andererseits ein Lichtleiter 65 sowie eine Schaltstange 66 geführt bzw. gehaltert sind. Die Teile 63 bis 66 sind in dem ringförmigen Raum so eingelegt, daß der dazwischenliegende Raum zur Durchleitung von Kühlluft zur Kühlung des Motors verwendet werden kann. Die Kühlluft durchströmt zunächst den Kupplungskörper III, wobei die Luftführung so ausgeführt ist, daß die Lampe 35 von der vorbeiströmenden Luft gekühlt wird, tritt dann, von den in Figur 8 mit 57 bezeichneten Austrittsöffnungen kommend, an den in den Figuren 11 und 13 mit Pfeilen gekennzeichneten Stellen in die Hülse 21 ein, strömt dann zwischen der äußeren Hülse 60 und dem Einsatzteil 61 durch den Adapter hindurch, tritt im Bereich der mit der Ringnut 5 der Motorpatrone zusammenwirkenden Kugelrastung 67 aus dem Adapter aus und tritt bei auf die Motorpatrone aufgestecktem Adapter über die Kanäle 33 in den Innenraum des Motors wieder ein.

Wie aus Figur 12, die den Adapter von der dem Kupplungskörper III zugewandten Stirnseite zeigt, hervorgeht, weist der Adapter ein im wesentlichen U-förmiges Teil 69 mit zueinander parallelen Flächen 68 auf, die zu den in Figur 8 gezeigten, mit 48 bezeichneten Positionierungsflächen passen und welche bei Aufstecken des Adapters ein Zentrieren und Positionieren des Adapters relativ zum Kupplungskörper bewirken, so daß im gekuppelten Zustand das Lichtleiterende 65a der Glühlampe 35 korrespondierend gegenübersteht und die Enden 63a, 64a der beiden medienführenden Kanäle 63 und 64 in die entsprechenden Anschlußbuchsen 38, 39 des Kupplungskörpers III eingreifen. Im gekuppelten Zustand liegt das mit 66a bezeichnete eine Ende des Schaltgestänges 66 an der in Figur 7 mit 58 bezeichneten Anlagefläche der Schalteinrichtung 37 an. Sobald ein Hand- und Winkelstück der in Figur 6 gezeigten Art auf den Adapter V aufgesteckt wird, kommt zunächst die in Figur 6 mit 25 bezeichnete Schaltnase am anderen Ende 66b des Schaltgestänges 66 zur Anlage, danach wird die Schaltstange 66 achsparallel verschoben, wodurch über die Schaltnocke 37 (Fig. 7) der elektrische Kontakt mit den Schleifringen 13 (Fig. 2) des Anschlußteiles II hergestellt wird.

Wie aus Figur 14 erkennbar, hat der Adapter V an der dem Zapfen 22 zugewandten Stirnseite kreisförmigen, zentrisch zur Motorachse liegenden Querschnitt, hingegen am gegenüberliegenden Ende im Bereich der Medienübergabe einen Querschnitt, der exzentrisch zur Motorachse liegt.

Bei Verwendung eines kompletten Handstückes, wie in Figur 4 gezeigt, ist das hülsenförmige Endteil 19, wie anhand des Adapters V aufgezeigt, aufgebaut, d. h. auch hier sind die Leitungen für Licht, Luft und Wasser in der beschriebenen Weise so vorgesehen, daß sie zu den Anschlußelementen im Kupplungskörper III passen.

Die erfindungsgemäße Handstückanordnung ist nicht auf die Verwendung einer mit einem Elektromotor ausgestatteten Antriebspatrone beschränkt ; sie läßt sich vielmehr auch anwenden bei einer Antriebspatrone mit einem Luftmotor.

## Patentansprüche

1. Zahnärztliche Handstückanordnung mit einem Antriebsmotor, an dessen Welle (3) der Triebwellenabschnitt (20/24) eines ein Kopfgehäuse (17) sowie eine Griffhülse (18) enthaltenden Handstückteils (IV, VI) ankuppelbar ist, dadurch gekennzeichnet,

a) daß der Antriebsmotor aus einer im wesentlichen nur Stator, Rotor, Lager und gegebenenfalls Bürsten u. Bürstenhalter (27 bis 30) aufnehmenden Motorpatrone (I) mit zylindrischer Mantelfläche besteht, an deren einen Stirnseite das mit einem Kupplungsglied (4) versehene Wellenende (3) vorsteht und an deren anderen Stirnseite Anschlußmittel (8) für den lösbaren Anschluß eines Luft- und/oder Wasser- sowie elektrische Leitungen (10) führenden Versorgungsschlauches (9) vorgesehen sind,

b) daß die Mantelfläche (1) der Motorpatrone (I) zwei zueinander beabstandete zylindrische Lagerflächen (2) bildet, um die ein auf die Motorpatrone axial aufsteckbares Handstückteil (IV, V) drehbar ist, welches die Griffhülse (18) und das Kopfgehäuse (17) enthält oder an welchem eine Griffhülse mit Kopfgehäuse enthaltendes Handstückteil (VI) axial ankuppelbar ist,

c) daß eine Schnellrasteinrichtung (5, 67) vorhanden ist, mittels der das auf die Motorpatrone (I) aufsteckbare Handstückteil (IV, V) unter Beibehaltung der Drehbarkeit axial gehalten werden kann,

d) daß die Motorpatrone (I) an ihrem dem Versorgungsschlauch (9) zugewandten Ende einen rohrförmigen Ansatz (6) mit gegenüber die Lagerflächen (2) bildenden Teil der Motorpatrone (I) kleinerem Außendurchmesser enthält,

e) daß auf den Ansatz (6) ein über die Mantelfläche (1) der Motorpatrone überstehender hülsenförmiger Kupplungskörper (III) drehbar aufgesetzt ist, der die Medien Luft und/oder Wasser von aus der zylindrischen Oberfläche eines im Außendurchmesser dem Innendurchmesser des Ansatzes (6) angepaßten Zapfens (7) des Versorgungsschlauches (9) austretenden Öffnungen (11, 12) und elektrische Energie von auf der Zapfenoberfläche angeordneten Schleifringen (13) übernimmt und zu Anschlußgliedern (36, 38, 39) führt, die in einem einseitig gegenüber der Mantelfläche (1) der Motorpatrone vorstehendem Halterungsteil (40) einander benachbart angeordnet sind und dort so enden, daß sie bei angekuppeltem Handstückteil (IV, V) von den Enden (63a, 64a, 65a) der im wesentlichen achsparallel dort verlaufenden Mediumleitungen (63, 64, 65) übernommen werden, und

f) daß das die Anschlußglieder (36, 38, 39) aufnehmende Halterungsteil (40) des Kupplungskörpers (III) und das auf die Motorpatrone (I) aufsteckbare Handstückteil (IV, V) vorzugsweise zueinander parallel verlaufende Flächen (48, 68) zur Positionierung und Mitnahme der beiden Teile (IV, V ; III) enthalten.

2. Handstückanordnung nach Anspruch 1, dadurch gekennzeichnet, daß die Anschlußglieder (36, 38, 39) ein mittig im Halterungsteil (40) angeordnetes elektrisches Kontaktpaar (36) zur Halterung einer Glühlampe (35) und zwei symmetrisch dazu angeordnete Buchsen (38, 39) für die Kühlmedienübertragung beinhalten.

3. Handstückanordnung nach Anspruch 2, dadurch gekennzeichnet, daß die Buchsen (38, 39) im Halterungsteil (40) auswechselbar angeordnet sind.

4. Handstückanordnung nach Anspruch 2, dadurch gekennzeichnet, daß der Kupplungskörper (III) einen quetschbaren, mit der Zufuhrleitung (10) für Wasser verbundenen Schlauchabschnitt (43) enthält, auf den ein Quetschkörper (45) aufliegt, der mittels exzentrischer Stellflächen (46) mittels eines am Halterungsteil (40) drehbar angeordneten Regelringes (47) betätigt wird.

5. Handstückanordnung nach Anspruch 4, dadurch gekennzeichnet, daß der Regelring (47) zweiteilig ausgebildet ist und einen die Stellfläche (46) enthaltenden ersten Ring (47a) und einen die Glühlampe (35) überdeckenden zweiten Ring (47b) enthält.

6. Handstückanordnung nach einem der Ansprüche 1 bis 5, dadurch gekennzeichnet, daß das Halterungsteil (40) zwei federnde Kontaktbahnen (50, 51) enthält, deren eine Enden (36) das elektrische Kontaktpaar für die Glühlampe (35) bilden und von deren anderen Enden das eine (52) einen Kontakt mit dem einen Schleifring des Schleifringpaares (13) am Zapfen (7) der Versorgungsleitung (9) hat und das andere auf einer federbelasteten Schaltnocke (37) federnd aufliegt und bei deren Betätigung Kontakt mit dem anderen Schleifring des Schleifringpaares (13) herstellt.

7. Handstückanordnung nach einem der Ansprüche 1 bis 6, dadurch gekennzeichnet, daß der Kupplungskörper (III) und der rohrförmige Ansatz (6) miteinander in Eingriff bringbare Rastmittel in Form eines in eine Nut eingreifenden O-Ringes (15) enthält.

8. Handstückanordnung nach einem der Ansprüche 1 bis 7, dadurch gekennzeichnet, daß das rückwärtige Ende der Motorpatrone (I) durch eine den rohrförmigen Ansatz (6) enthaltende Schraubhülse (31) gebildet ist, die in montiertem Zustand einen Bürstenhalter (30) axial fixiert.

9. Handstückanordnung nach Anspruch 8, dadurch gekennzeichnet, daß der Bürstenhalter (30) Kontakte (32) in Form eines axialen Kontaktstiftes und eines konzentrisch dazu angeordneten Ringkontaktes enthält.

10. Handstückanordnung nach einem der Ansprüche 1 bis 9, dadurch gekennzeichnet, daß die Motorpatrone (I) beidseitig stirnseitige, mit dem Innenraum des Motors verbundene Lufteintrittsöffnungen (33, 34) enthält.

11. Handstückanordnung nach einem der Ansprüche 1 bis 10, dadurch gekennzeichnet, daß das auf die Motorpatrone (I) aufsetzbare Handstückteil (V) eine die Motorpatrone übergreifende Hülse (21) mit einem an der dem Versorgungsschlauch (9) abgewandten Seite angeordneten, die Antriebswelle (3) des Motors umgebenden Führungszapfen (22) enthält, auf den in bekannter Weise ein Hand- und Winkelstück (VI) axial aufsteckbar und im aufgesteckten Zustand drehbar gehaltert ist, wobei im aufgesteckten Zustand der oder die Triebwellenabschnitt (24) des Hand- und Winkelstückes mit der Motorwelle (3) in Eingriff stehen, daß die Hülse (21) an ihrer dem Versorgungsschlauch (9) zugewandten Stirnseite Flächen (68) aufweist, die mit den am Kupplungskörper (III) befindlichen Positionierflächen (48) beim Aufstecken der Hülse (21) in Eingriff kommen, daß mindestens eine Rohrleitung für Wasser und Luft und gegebenenfalls ein lichtführendes Element (65) in der Hülse (21) achsparallel geführt sind, von denen die Rohrleitungen für Luft und Wasser in bekannter Weise am Führungszapfen (22) in radialen Bohrungen (23) und das lichtführende Element (65) stirnseitig der Hülse (21) enden.

12. Handstückanordnung nach einem der Ansprüche 1 bis 10, dadurch gekennzeichnet, daß das auf die Motorpatrone (I) aufsetzbare Handstückteil (IV) eine die Motorpatrone übergreifende Hülse (19) mit sich daran anschließender Griffhülse (18) und daran angeordnetem, das Kopfgehäuse (17) enthaltendem Kopfteil enthält, deren Triebwellenabschnitte (20) im aufgesteckten Zustand mit der Motorwelle (3) in Eingriff stehen, daß die Hülse (19) an ihrer dem Versorgungsschlauch (9) zugewandten Stirnseite Flächen aufweist, die mit den am Kupplungskörper (IV) befindlichen Positionierflächen (48) beim Aufstecken der Hülse (19) in Eingriff kommen und daß mindestens eine Rohrleitung für Wasser und Luft und gegebenenfalls ein lichtführendes Element in der Hülse (19) achsparallel geführt sind.

13. Handstückanordnung nach Anspruch 11 oder 12, dadurch gekennzeichnet, daß die Hülse (19, 21) stirnseitig ein federbelastetes Betätigungselement (66b) enthält, welches mit einer achsparallel in der Hülse (19, 21) geführten Schaltstange (66) verbunden ist, die stirnseitig der Hülse, gegenüber dieser leicht zurückgesetzt, endet und im gekuppelten Zustand an einer Fläche (58) einer Schaltnocke (37) des Kupplungskörpers (III) anliegt.

14. Handstückanordnung nach Anspruch 11 oder 12, dadurch gekennzeichnet, daß die Hülse (19, 21) an dem dem Führungszapfen (22) zugewandten Ende konzentrisch zur Antriebswelle (3) der Antriebspatrone (I) und am gegenüberliegenden Ende exzentrisch zu dieser ausgebildet und angeordnet ist (Figur 12).

15. Handstückanordnung nach einem der Ansprüche 11 bis 13, dadurch gekennzeichnet, daß die Hülse (19/21) doppelwandig ausgebildet ist und eine dünne Außenhülse (60) und ein Einsatzteil (61) enthält, welches eine Bohrung zur Aufnahme und Lagerung (2) der Motorpatrone (I) enthält und welches an seiner Peripherie Ausnehmungen (62) enthält, die mit der Außenhülse (60) einen kreisringförmigen Raum bilden, in den die Rohrleitungen (63, 64) ein oder mehrere Lichtleiter (65) und die Schaltstange (66) eingelegt und an ihren Enden geführt sind, und daß ein dazwischenliegender Raum zur Durchleitung von Kühlluft gebildet ist, die aus dem Kupplungskörper (III) im Bereich der Glühlampe (35) kommend in die Hülse (19, 21) eingeleitet und über Ringnuten verteilt in den kreisringförmigen Raum geleitet wird.

16. Handstückanordnung nach einem der Ansprüche 1 bis 14, dadurch gekennzeichnet, daß das die Motorpatrone (I) aufsetzbare Handstückteil (IV) im wesentlichen aus einer den Motor übergreifenden Hülse (19) mit einer daran angeformten Griffhülse (18) und einem daran angeordneten, das Kopfgehäuse (17) enthaltenden Kopfteil besteht.

**Claims**

1. Dental hand piece equipment with a driving motor, on the shaft (3) of which the drive shaft part (20/24) of a hand piece part (IV, VI), containing a head casing (17) and a grip sleeve (18), can be coupled,
characterised
a) in that the driving motor comprises a motor cartridge (I) with a cylindrical outer surface and substantially containing only stator, rotor, pivot and if necessary brushes and brush holders (27 to 30), wherein the shaft end (3) provided with a coupling link (4) projects from one face of the motor cartridge, and connecting means (8) for detachably connecting a supply tube (9), which supports air and/or water leads as well as electric leads (10), are provided at the other face of the motor cartridge,
b) in that the outer surface (1) of the motor cartridge (I) forms two cylindrical bearing faces (2) at a distance apart, about which a hand piece part (IV, V), which can be mounted axially on the motor cartridge, can be rotated, wherein the hand piece part contains the grip sleeve (18) and the head casing (17), or a hand piece part (VI) containing a grip sleeve with a head casing can be axially coupled on to the hand piece part (IV, V),
c) in that a rapid locking device (5, 67) is present, by means of which the hand piece part (IV, V), which can be mounted on the motor cartridge (I), can be axially held while retaining the ability to rotate,
d) in that the motor cartridge (I) contains on its end facing the supply tube (9) a tubular extension (6), which has a smaller external diameter with respect to the part of the motor cartridge (I) forming the bearing faces (2),
e) in that a cartridge-shaped coupling body (III) projecting over the outer surface (1) of the motor cartridge is mounted on the extension (6) in a rotatable manner and receives air and/or water media from openings (11, 12) leading out from the cylindrical surface of a plug (7) of the supply tube, the external diameter of the plug being adapted to the internal diameter of the extension (6), and receives electric energy from slide rings (13) arranged on the surface of the plug and guides them to connecting links (36, 38, 39) which are arranged adjacent to each other in a mounting part (40) projecting on one side opposite the outer surface (1) of the motor cartridge and which finish there in such a way that when the hand piece part (IV, V) has been coupled on, they are received by the ends (63a, 64a, 65a) of the medium leads (63, 64, 65) running substantially axially parallel there,
f) and in that the mounting part (40) of the coupling body (III), which receives the connecting links (36, 38, 39), and the hand piece part (IV, V), which can be mounted on the motor cartridge (I), preferably contain surfaces (48, 68) running parallel to each other for positioning and driving the two parts (IV, V ; III).

2. Hand piece arrangement according to claim 1, characterised in that the connecting links (36, 38, 39) contain an electric contact pair (36) arranged centrally in the mounting part (40), for mounting an electric bulb (35) and two cases (38, 39) arranged symmetrically to the contact pair (36) for transferring the cooling agents.

3. Hand piece arrangement according to claim 2, characterised in that the cases (38, 39) are arranged interchangeably in the mounting part (40).

4. Hand piece arrangement according to claim 2, characterised in that the coupling body (III) contains a squeezable tube part (43) connected to the water supply lead (10), a squeeze body (45) being supported on the tube part and actuated by means of eccentric position surfaces (46) by means of a control ring (47) arranged in a rotatable manner on the mounting part (40).

5. Hand piece arrangement according to claim 4, characterised in that the control ring (47) is constructed in two parts and contains a first ring (47a) containing the position surface (46) and a second ring (47b) covering the electric bulb (35).

6. Hand piece arrangement according to one of claims 1 to 5, characterised in that the mounting part (40) contains two flexible contact paths (50, 51), the one ends (36) of which constitute the electric bulb (35) and one of the other ends of which has a contact with the one slide ring of the slide ring pair (13) at the plug (7) of the supply lead (9) and the other end of which is supported flexibly on a spring-loaded trip cam (37) and, when the latter is actuated, makes a contact with the other slide ring of the slide ring pair (13).

7. Hand piece arrangement according to one of claims 1 to 6, characterised in that the coupling body (III) and the tubular extension (6) contain locking means which can be brought into contact with each other and have the form of an O-ring (15) engaging in a slot.

8. Hand piece arrangement according to one of claims 1 to 7, characterised in that the rearward end of the motor cartridge (I) is formed by a collet (31) containing the tubular extension (6), the collet, in its mounted position, axially fixing a brush holder (30).

9. Hand piece arrangement according to claim 8, characterised in that the brush holder (30) contains contacts (32) in the form of an axial contact pin and of a ring contact arranged concentrically to the latter.

10. Hand piece arrangement according to one of claims 1 to 9, characterised in that the motor cartridge (I) contains on both sides facing air inlet openings (33, 34) connected with the inner chamber of the motor.

11. Hand piece arrangement according to one of claims 1 to 10, characterised in that the hand piece part (V) which can be mounted on the motor cartridge (I) contains a casing which (21) overlaps tne motor cartridge and has a guide plug (22) which is arranged on the side turned away from the supply tube (9) and surrounds the drive shaft of the motor and on which in a known manner a hand and elbow piece (VI) can be axially mounted and is held in its mounted position in a rotatable manner, whereby in the mounted position the drive shaft part or parts (24) of the hand or elbow piece are in contact with the motor shaft (3), in that the casing (21) has, at its front side facing the supply tube (9), surfaces (68) which come into contact with the position surfaces (48) located on the coupling body (III) when the casing (21) is mounted, in that a least one tube lead for water and air and if necessary a light-guiding element (65) are disposed axially parallel in the casing (21), the tube leads for air and water ending in a known manner in radial drill holes on the guide plug (22) and the light-guiding element (65) ending facing the casing (21).

12. Hand piece arrangement according to one of claims 1 to 10, characterised in that the hand piece part (IV) which can be mounted on the motor cartridge (I) contains a casing (19) which overlaps the motor cartridge and has a grip sleeve (18) connected to it, and arranged on it, a head part containing the head casing (17), and whose drive shaft parts (20), when inserted, are in contact with the motor shaft (3), in that the casing (19) has on its front side facing the supply tube (9) surfaces which come into contact with the position surfaces (48) located on the coupling body (IV) when the casing (19) has been inserted, and in that at least one tube lead for water and air and if necessary a light-guiding element are disposed axially parallel in the casing (19).

13. Hand piece arrangement according to claim 11 or 12, characterised in that the casing (19, 21) contains on its face a spring-loaded actuation element (66b) which is connected with a shifter rod (66) disposed axially parallel in the casing (19, 21), wherein the shifter rod ends facing the casing and is slightly placed back with respect to it, and in its coupled position is supported on a surface (58) of a trip cam (37) of the coupling body (III).

14. Hand piece arrangement according to claim 11 or 12, characterised in that the casing (19, 21), at the end facing the guide plug (22), is constructed and arranged concentrically to the drive shaft (3) of the drive cartridge (I) and at the opposite end is constructed and arranged eccentrically to the latter.

15. Hand piece arrangement according to one of claims 11 to 13, characterised in that the casing (19/21) is constructed with two walls and contains a thin outer casing (60) and an inserted part (61), which contains a drill hole for receiving and holding (2) the motor cartridge (I) and which contains recesses (62) on its periphery, which form a circular chamber with the outer casing (60), into which the tube connections (63, 64), one or more light guides (65) and the shifter rod (66) are inserted and guided at their ends, and in that a intermediate chamber for conducting cool air is formed, the air, which comes from the coupling body (III) in the region of the electric bulb (35) being led into the casing (19, 21) and, distributed by annular slots, directed into the circular chamber.

16. Hand piece arrangement according to one of claims 1 to 14, characterised in that the hand piece part (V) which can be mounted on the motor cartridge (I) comprises substantially a casing (19) which overlaps the motor with a grip sleeve (18) formed on it and a head part containing the head casing (17) arranged on it.

**Revendications**

1. Agencement de pièce à main de dentisterie, avec un moteur d'entraînement à l'arbre (3) duquel est susceptible d'être accouplée la section d'arbre d'entraînement (20/24) d'un élément de pièce à main (IV, VI) contenant un boîtier de tête (17) ainsi qu'une douille de préhension, caractérisé par le fait

a) que le moteur d'entraînement est constitué par une cartouche-moteur (I) à surface latérale cylindrique, ne recevant que le stator, le rotor, les paliers et éventuellement les balais et porte-balais, et sur une de ses surfaces frontales de laquelle fait saillie l'extrémité de l'arbre (3) pourvu d'un organe d'accouplement, alors que sur son autre face frontale sont prévus des moyens de raccordement (8) pour la liaison détachable d'un tuyau d'alimentation (9) dans lequel passent des conduites pour l'air et/ou l'eau, ainsi que des conducteurs électriques (10),

b) que la surface latérale (1) de la cartouche-moteur (I) forme deux surfaces de montage cylindriques (2) situées à distance l'une de l'autre sur lesquelles est susceptible d'être monté axialement, avec faculté de tourner, un élément de pièce à main (IV, V) qui comporte la douille de préhension (18) et le boîtier de tête (17), où auxquelles est susceptible d'être accouplé axialement un élément de pièce à main (VI) comportant une douille de préhension à boîtier de tête,

c) qu'il est prévu un dispositif à enclenchement rapide (5, 67) à l'aide duquel l'élément de pièce à main (IV, V) qui est susceptible d'être emmanché sur la cartouche-moteur (I), peut être maintenu axialement, tout en conservant sa capacité de tourner,

d) que la cartouche-moteur (I) comporte, à son extrémité voisine du tuyau d'alimentation (9), un appendice tubulaire (6) d'un diamètre extérieur plus petit comparativement à la partie de la cartouche-moteur (I) qui constitue les surfaces de montage (2),

e) que sur l'appendice (6) est monté à rotation et en position débordante par rapport à la surface latérale (1) de la cartouche-moteur, un corps d'accouplement (III) de la forme d'une douille, qui prend en charge les milieux air et/ou eau à partir d'ouvertures (11, 12) débouchant de la surface cylindrique d'un tourillon (7) du tuyau d'alimentation (9), dont le diamètre extérieur est adapté au diamètre intérieur de l'appendice (6), et l'énergie électrique à partir de bagues de friction (13) disposés sur la surface du tourillon, pour les mener à des organes de branchement (36, 38, 39) qui sont disposés l'un près de l'autre dans un élément de support (40) unilatéralement en saillie sur la surface latérale (11) de la cartouche-moteur et y terminent de telles façons que lorsque l'élément de pièce à main (IV, V) est accouplé, ils sont pris en charge par les extrémités (63a, 64a, 65a) des conduites et conducteurs (63, 64, 65) qui s'y étendent dans l'ensemble parallèlement entre eux,

f) que l'élément de support (40) du corps d'accouplement (III) qui reçoit les éléments de branchement (36, 38, 39) et l'élément de pièce à main (IV, V) susceptible d'être monté sur la cartouche-moteur (I), comportent, de préférence des surfaces (48, 68) qui s'étendent parallèlement entre elles et qui servent au positionnement et à l'entraînement des deux éléments (IV, V ; III).

2. Agencement de pièce à main selon la revendication 1, caractérisé par le fait que les organes de branchement (36, 38, 39) comportent une paire de contacts électriques (36) disposés en position médiane dans l'élément de support (40) et servant à porter une lampe à incandescence (35), et deux douilles (38, 39) disposées symétriquement par rapport à celles-ci et servant à la transmission du milieu de refroidissement.

3. Agencement de pièce à main selon la revendication 2, caractérisé par le fait que les douilles (38, 39) sont disposées dans l'élément de support (40) de façon à être remplaçables.

4. Agencement de pièce à main selon la revendication 2, caractérisé par le fait que le corps d'accouplement (III) comporte une section de tuyau (43) qui est susceptible d'être écrasée et qui est reliée à la conduite d'alimentation (10) pour l'eau, section de tuyau sur laquelle repose un corps d'écrasement (45) qui est commandé à l'aide de surfaces de réglage excentrées (46), à l'aide d'une bague de réglage (47), disposées à rotation sur l'élément de support (40).

5. Agencement de pièce à main selon la revendication 4, caractérisé par le fait que la bague de réglage (47) est réalisée en deux pièces, et comporte une première bague (47a) pourvue de la surface de réglage (46) et une seconde bague (47a) qui recouvre la lampe à incandescence (35).

6. Agencement de pièce à main selon l'une des revendications 1 à 5, caractérisé par le fait que l'élément de support (14) comporte deux pistes de contact élastiques (50, 51), dont une des extrémités (36) constitue la paire de contacts électriques pour la lampe à incandescence (35) et parmi les autres extrémités, l'une (52) possède un contact avec une des bagues de friction de la paire de bague de friction (13) prévue sur le tourillon (7) de la conduite d'alimentation (9), alors que l'autre porte élastiquement sur une came de commutation (37) chargée par un ressort, et établit, lors de leur commande, le contact avec l'autre bague de friction de la paire de bague de friction (13).

7. Agencement de pièce à main selon l'une des revendications 1 à 6, caractérisé par le fait que le corps d'accouplement (III) et l'appendice tubulaire (6) possèdent des moyens susceptibles d'être amenés en prise entre eux, sous la forme d'un joint torique (15) qui pénètre dans une gorge.

8. Agencement de pièce à main selon l'une des revendications 1 à 7, caractérisé par le fait que l'extrémité postérieure de la cartouche-moteur (I) est constituée par une douille vissable (31) qui comporte l'appendice tubulaire (6) et qui, à l'état monté, fixe axialement un support de balai (30).

9. Agencement de pièce à main selon la revendication 8, caractérisé par le fait que le support de balais (30) comporte des contacts (32) sous la forme d'une tige de contact axiale et d'un contact annulaire disposés concentriquement par rapport à celle-ci.

10. Agencement de pièce à main selon l'une des revendications 1 à 9, caractérisé par le fait que la cartouche-moteur (I) comporte de part et d'autre des ouvertures d'admission d'air (33, 34) qui sont prévues du côté frontal et qui sont reliées avec l'espace intérieur du moteur.

11. Agencement de pièce à main selon l'une des revendications 1 à 10, caractérisé par le fait que l'élément de pièce à main (V), qui est susceptible d'être monté sur la cartouche-moteur (I), comporte une douille (21) qui déborde la cartouche-moteur, un tourillon de guidage (22) qui est disposé du côté qui est éloigné du tuyau d'alimentation (9) et qui entoure l'arbre d'entraînement (3) du moteur, tourillon de guidage sur lequel, de façon connue, est susceptible d'être montée axialement une pièce à main et une pièce coudée (VI) et qui est, à l'état monté est supportée de façon à pouvoir tourner, de manière, qu'à l'état enfiché, la ou les sections de l'arbre d'entraînement (24) de la pièce à main ou de la pièce coudée sont en prises avec l'arbre du moteur (3), que la douille (21) comporte, sur le côté frontal qui est voisin du tuyau d'alimentation (9), des surfaces (68) qui viennent en prises avec les surfaces de positionnement (48) qui se trouvent sur le corps d'accouplement (III), lorsque la douille (21) est enfichée, qu'au moins une conduite pour l'eau et pour l'air et, éventuellement, un élément (65) capable de conduire la lumière, sont guidés dans la douille (21), parallèlement à l'axe, et parmi lesquels les conduites pour l'air et l'eau se terminent, de façon connue, au niveau du tourillon de guidage (22), par des perçages radiaux (23), alors que l'élément capable de conduire la lumière (65) se termine du côté frontal de la douille (21).

12. Agencement de pièce à main selon l'une des revendications 1 à 10, caractérisé par le fait que l'élément de pièce à main (IV), qui est susceptible d'être enfiché sur la cartouche-moteur (I), comporte une douille (19) qui déborde de la cartouche-moteur, avec une douille de préhension (18) qui fait suite et avec un élément de tête comportant le boîtier de tête (17), et dont les sections de l'arbre d'entraînement (20) sont en prises, à l'état monté, avec l'arbre du moteur (3), que la douille (19) présente, sur son côté frontal

9

qui est voisin du tuyau d'alimentation (9), des surfaces qui viennent en prises avec les surfaces de positionnement (48) du corps d'accouplement (IV), lorsque la douille (19) est emmanchée, et qu'au moins une conduite pour l'eau et pour l'air et éventuellement un élément de guidage de la lumière s'étendent dans la douille (19) parallèlement à l'axe.

13. Agencement de pièce à main selon la revendication 11 ou 12, caractérisé par le fait que la douille (19, 21) comporte, du côté frontal, un élément de commande (66b) chargé par un ressort, lequel élément est relié avec une tige de commutation qui est guidée, parallèlement à l'axe, dans la douille (19, 21), laquelle tige de commutation se termine, du côté frontal de la douille, légèrement en retrait par rapport à celleci, alors qu'à l'état accouplé, elle porte contre une surface (58) d'une came de commutation (37) du corps d'accouplement (III).

14. Agencement de pièce à main selon la revendication 11 ou 12, caractérisé par le fait que la douille (19, 21) est réalisée et disposée du côté voisin du tourillon de guidage (22), concentriquement à l'arbre d'entraînement (3) de la cartouche d'entraînement (1), et, au niveau de l'extrémité opposée, avec excentrement par rapport à celleci (Figure 12).

15. Agencement de pièce à main selon l'une des revendications 11 à 13, caractérisé par le fait que la douille (19/21) est réalisée avec une double paroi et comporte une douille extérieure mince (60) et un élément d'insert (61) qui comporte un perçage destiné à la réception et au montage (22) de la cartouche-moteur (I) et qui présente, à sa périphérie, des dégagements (62) qui forment avec la douille extérieure (60) une chambre circulaire dans laquelle sont placés les conduites (63, 64) et un ou plusieurs guides d'ondes de lumière (65) ainsi que la tige de commutation (66), lesquels sont guidés à leurs extrémités, et qu'une chambre intermédiaire est formée pour le passage d'air de refroidissement qui, provenant du corps d'accouplement (III), au niveau de la lampe à incandescence (35), est guidé dans la douille (19, 21) pour passer, par l'intermédiaire de gorges annulaires, avec répartition, dans la chambre circulaire.

16. Agencement de pièce à main selon les revendications 1 à 14, caractérisé par le fait que l'élément de pièce à main (IV) qui est susceptible d'être monté sur la cartouche-moteur (I), est essentiellement constitué par une douille (19) débordant et entourant le moteur et sur laquelle est conformée une douille de préhension (18), ainsi que par un élément de tête qui comporte le boîtier de tête (17) et qui est conformée sur ladite douille de préhension.

FIG 2

FIG 5

FIG 3

FIG 1

FIG 4

FIG 6

1

FIG 7

FIG 8

FIG 10

FIG 9

EP 0 183 972 B1

FIG 12

FIG 11

FIG 13

FIG 14

EP 0 183 972 B1